(19) Europäisches Patentamt
European Patent Office
Office européen des brevets

(11) **EP 3 618 511 B1**

(12) **EUROPEAN PATENT SPECIFICATION**

(45) Date of publication and mention
of the grant of the patent:
**07.04.2021 Bulletin 2021/14**

(21) Application number: **18795190.0**

(22) Date of filing: **11.04.2018**

(51) Int Cl.:
**H04W 52/50** *(2009.01)*    **H04W 52/14** *(2009.01)*
**H04W 52/18** *(2009.01)*    **H04W 74/00** *(2009.01)*
**H04W 52/10** *(2009.01)*    **H04W 52/16** *(2009.01)*

(86) International application number:
**PCT/CN2018/082709**

(87) International publication number:
**WO 2018/201869 (08.11.2018 Gazette 2018/45)**

(54) **UPLINK SIGNAL TRANSMIT POWER DETERMINATION METHOD AND DEVICE**

VERFAHREN UND VORRICHTUNG ZUR BESTIMMUNG DER UPLINK-SIGNALSENDELEISTUNG

PROCÉDÉ ET DISPOSITIF DE DÉTERMINATION DE PUISSANCE D'ÉMISSION DE SIGNAL DE LIAISON MONTANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.05.2017 CN 201710314124**

(43) Date of publication of application:
**04.03.2020 Bulletin 2020/10**

(73) Proprietor: **Huawei Technologies Co., Ltd.
Longgang District
Shenzhen, Guangdong 518129 (CN)**

(72) Inventors:
• **LIU, Zhe**
  **Shenzhen**
  **Guangdong 518129 (CN)**
• **YANG, Chaobin**
  **Shenzhen**
  **Guangdong 518129 (CN)**
• **WANG, Yong**
  **Shenzhen**
  **Guangdong 518129 (CN)**
• **GAO, Quanzhong**
  **Shenzhen**
  **Guangdong 518129 (CN)**
• **TANG, Hao**
  **Shenzhen**
  **Guangdong 518129 (CN)**
• **WANG, Fan**
  **Shenzhen**
  **Guangdong 518129 (CN)**
• **ZHOU, Guohua**
  **Shenzhen**
  **Guangdong 518129 (CN)**

(74) Representative: **MERH-IP Matias Erny Reichl
Hoffmann
Patentanwälte PartG mbB
Paul-Heyse-Strasse 29
80336 München (DE)**

(56) References cited:
**EP-A1- 3 506 708**    **WO-A1-2018/200117**
**CN-A- 103 813 430**    **CN-A- 104 812 041**
**US-A1- 2017 041 028**

• **HUAWEI ET AL: "Considerations of NR UL
operation for LTE-NR coexistence", 3GPP
DRAFT; R1-1704199, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE , vol. RAN WG1, no. Spokane,
USA; 20170403 - 20170407 2 April 2017
(2017-04-02), XP051242351, Retrieved from the
Internet:
URL:http://www.3gpp.org/ftp/Meetings_3GPP_
SYNC/RAN1/Docs/ [retrieved on 2017-04-02]**
• **HUAWEI et al.: "RI-1706905. Overview of NR UL
for LTE-NR Coexistence", 3GPPTSG RAN WG1
Meeting #89, 19 May 2017 (2017-05-19), pages
4-13, XP051272136,**

Description

## TECHNICAL FIELD

This application relates to the field of wireless communications technologies, and in particular, to a method and device for determining transmit power of an uplink signal.

## BACKGROUND

Currently, in a fifth-generation mobile communications system, two types of base stations are mainly proposed: a long term evolution (Long Term Evolution, LTE) base station and a new radio (New Radio, NR) base station. Functions of the two types of base stations are similar, and a main difference is that the two types of base stations are deployed in different frequency bands. In the prior art, the NR base station is mainly deployed in a high frequency band, and the LTE base station is mainly deployed in a low frequency band. In a wireless communications system, a higher frequency of a carrier indicates a larger path loss and poorer uplink coverage. The NR base station is deployed in the high frequency band, and therefore has a problem of limited uplink coverage.

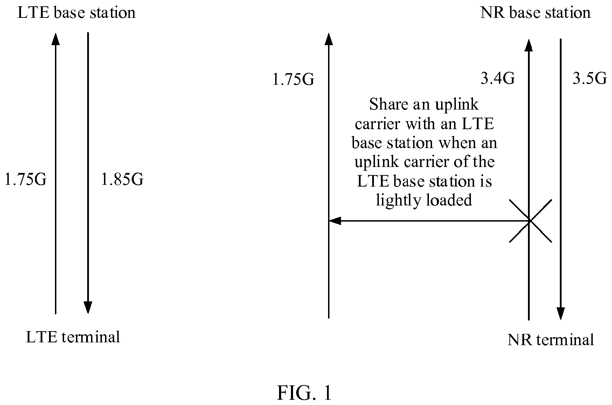

To resolve the problem of limited uplink coverage of the NR base station, a person in the related art proposes the following solution: When an uplink carrier of the LTE base station is lightly loaded, the NR base station shares an uplink carrier resource of the LTE base station. In this way, uplink resource utilization of the LTE base station can be improved, and the uplink coverage of the NR base station can be improved. For example, as shown in FIG. 1, an uplink operating frequency band of the LTE base station is 1.75 GHz, a downlink operating frequency band is 1.85 GHz, and the uplink operating frequency band 1.75 GHz is bound with the downlink operating frequency band 1.85 GHz. An uplink operating frequency band of the NR base station is 3.4 GHz, a downlink operating frequency band is 3.5 GHz, and the uplink operating frequency band 3.4 GHz is bound with the downlink operating frequency band 3.5 GHz. When the uplink carrier of the LTE base station is lightly loaded, uplink data may be transmitted to the NR base station on an uplink carrier of 1.75 GHz of the LTE base station.

For ease of description, two terminals are defined below: an LTE terminal and an NR terminal. The LTE terminal is a terminal that selects the LTE base station as a serving base station. The LTE terminal receives a downlink signal from the LTE base station by using an LTE standard, and transmits an uplink signal to the LTE base station. The NR terminal is a terminal that selects the NR base station as a serving base station, and the NR terminal receives a downlink signal from the NR base station by using an NR standard, and transmits an uplink signal to the NR base station. In an actual application, during uplink data transmission, each of the LTE terminal and the NR terminal first needs to estimate an uplink path loss, and then determines transmit power of an uplink signal based on the estimated uplink path loss, for example, a larger estimated uplink path loss indicates higher transmit power of the uplink signal, to ensure that the base station can correctly receive and demodulate the uplink signal. In the prior art, when the NR terminal transmits an uplink signal on a shared uplink carrier of the LTE base station, a downlink path loss measured on an NR high-frequency downlink carrier is used as an uplink path loss on the shared uplink carrier, to calculate transmit power of the uplink signal. Consequently, uplink transmission performance of the NR terminal deteriorates, and even uplink transmission of the LTE terminal is affected. For example, if transmit power of a random access preamble of the NR terminal is excessively high, a random access preamble of the LTE terminal that shares the uplink carrier with the NR terminal is drowned.

Document EP 3 506 708 A1 discloses a communication technique for combining a 5G communication system for supporting a higher data transmission rate than a 4G system with an IoT technology. In particular, the usage of different power ramping values for LTE and NR Uplinks is disclosed.

Document WO 2018/200117 A1 discloses methods related to performing initial network access procedures using shared resources. A first wireless communication device transmits, in a first frequency band, a random access request to a first network. The first wireless communication device receives, in response to the random access request, a random access response from a second wireless communication device of the first network. The random access response is in a second frequency band allocated to the first network for time-division duplexing (TDD) communications. The second frequency band is different than the first frequency band.

Document R1-1704199, a 3GPP contribution titled "Consideration NR UL operation for LTE-NR-coexistence", Huawei et al., discloses different power control methods for uplink transmission depending on the uplink being an LTE or NR uplink.

## SUMMARY

This application provides a method and device, having the features of the independent claims, for determining transmit power of an uplink signal, to ensure uplink transmission performance of an NR base station, and reduce impact on uplink transmission of an LTE terminal. The invention is defined by the appended independent claims. Any other subject-matter falling outside of the claims shall be regarded as an example not in accordance with the invention.

In a possible example, the first uplink carrier includes at least one of the following: an uplink carrier in a first frequency division duplex FDD carrier and an uplink slot set of a first time division duplex TDD carrier; and the second uplink carrier includes at least one of the following: an uplink carrier in a second FDD carrier and an uplink slot set of a second TDD carrier.

In a possible example, the receiving, by a terminal device, a message sent by a network device includes: receiving, by the terminal device, the message sent by the network device on a first downlink carrier, where the first downlink carrier includes at least one of the following: a downlink carrier in the first FDD carrier and a downlink slot set of the first TDD carrier; and when the first uplink carrier is the uplink carrier in the first FDD carrier, the first downlink carrier is the downlink carrier in the first FDD carrier; or when the first uplink carrier is the uplink slot set of the first TDD carrier, the first downlink carrier is the downlink slot set of the first TDD carrier. The method and apparatus in accordance with the independent claims enable that the transmit power of the uplink signal matches the uplink carrier, to ensure uplink transmission performance of the terminal device, and reduce impact on uplink transmission of another terminal.

## BRIEF DESCRIPTION OF DRAWINGS

FIG. 1 is a schematic diagram of an application scenario according to this application;
FIG. 2 is a schematic diagram of an application scenario according to this application;
FIG. 3 is a flowchart of a method for determining transmit power of an uplink signal according to this application;
FIG. 4 is a schematic diagram of a random access process according to this application;
FIG. 5 is a flowchart of a method for determining transmit power of an uplink signal according to this application;
FIG. 6a is a schematic structural diagram of a wireless device according to this application;
FIG. 6b is a schematic structural diagram of a wireless device according to this application;
FIG. 7a is another schematic structural diagram of a wireless device according to this application;
FIG. 7b is another schematic structural diagram of a wireless device according to this application;
FIG. 8 is a schematic diagram of a wireless device according to this application; and
FIG. 9 is a schematic diagram of a network device according to this application.

## DESCRIPTION OF EMBODIMENTS

For ease of understanding, descriptions of concepts related to this application are provided for reference by using examples, shown as follows:

A base station (base station, BS) device, which may also be referred to as a base station, is an apparatus that is deployed in a radio access network to provide a wireless communication function. For example, in a 2G network, devices providing a base station function include a base transceiver station (base transceiver station, BTS) and a base station controller (base station controller, BSC); in a 3G network, devices providing a base station function include a NodeB (English: NodeB) and a radio network controller (radio network controller, RNC); in a 4G network, a device providing a base station function includes an evolved NodeB (evolved NodeB, eNB); in a WLAN, a device providing a base station function is an access point (access point, AP). In a future 5G network such as new radio (New Radio, NR) or LTE+, devices providing a base station function include a next generation NodeB (gNB), a TRP (transmission and reception point, transmission and reception point), or a TP (transmission point, transmission point). The TRP or the TP may not include a baseband part, and include only a radio frequency part; or may include a baseband part and a radio frequency part.

A long term evolution (Long Term Evolution, LTE) base station is an apparatus that is deployed in the radio access network to provide a wireless communication function. The LTE base station is a base station stipulated in 4G, and is mainly deployed in a low frequency band of approximately 2 GHz. For example, an uplink carrier in an LTE FDD carrier of a band 1 may be in a frequency band of 1920 MHz to 1980 MHz, and a downlink carrier may be in a frequency band of 2110 MHz to 2170 MHz.

A new radio (New Radio, NR) base station is an apparatus that is deployed in the radio access network to provide a wireless communication function. The NR base station is mainly deployed in a high frequency band in 5G, for example, a 3.5G frequency band.

User equipment (user equipment, UE) is a terminal device, and may be a mobile terminal device, or may be an immobile terminal device. The device is mainly configured to receive or send service data. The user equipment may be distributed in a network. In different networks, the user equipment has different names, such as a terminal, a mobile station, a subscriber unit, a station, a cellular phone, a personal digital assistant, a wireless modem, a wireless communications device, a handheld device, a laptop computer, a cordless telephone set, a wireless local loop station, or a vehicle-mounted device. The user equipment may communicate with one or more core networks by using the radio access network (radio access network, RAN) (an access part of a wireless communications network). For example, the user equipment exchanges voice and/or data with the radio access network.

A network device is a device located on a network side in the wireless communications network, and may be an access network element, such as a base station or a controller (if any), or may be a core network element, or may be another network element.

The following describes technical solutions of this application with reference to the accompanying drawings.

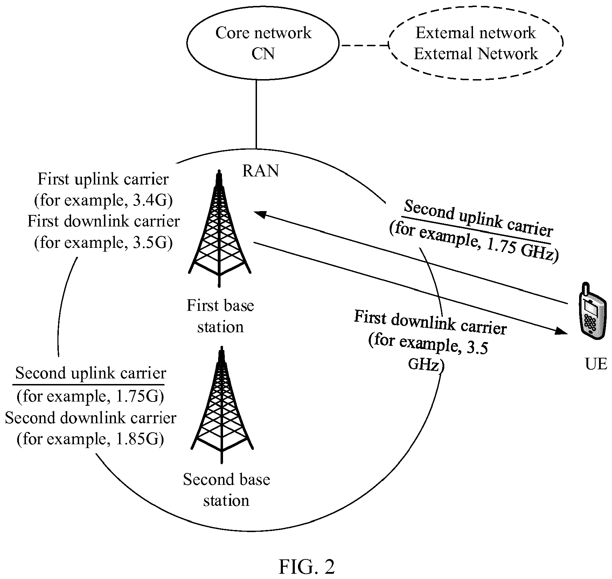

FIG. 2 is a schematic diagram of a possible system network according to an embodiment of this application. As shown in FIG. 2, there is at least one UE communicating with a radio access network (radio access network, RAN). The RAN includes at least a first base station and a second base station. The first base station and the second base station may be deployed in different frequency bands. For example, the first base station may be deployed in a high frequency band. For example, in a fifth-generation mobile communications system, the first base station may be an NR base station. The second base station may be deployed in a low frequency band. For example, in the fifth-generation mobile communications system, the second base station may be an LTE base station. For clarity, only two base stations, namely, the first base station and the second base station, and one UE are shown in the figure. The RAN is connected to a core network (core network, CN). Optionally, the CN may be coupled to one or more external networks (external network), such as the Internet or a public switched telephone network (public switched telephone network, PSTN).

It should be noted that the high frequency band is a frequency band whose frequency is greater than a preset frequency, and the low frequency band is a frequency band whose frequency is less than the preset frequency. For example, a frequency band above 2.6 GHz is used as the high frequency band, and a frequency band below 2.6 GHz is used as the low frequency band.

In this application, the first base station may include a first uplink carrier and a first downlink carrier. When the first uplink carrier is an uplink carrier in a first FDD carrier, the first downlink carrier is a downlink carrier in the first FDD carrier. When the first uplink carrier is an uplink slot set of a first TDD carrier, the first downlink carrier is a downlink slot set of the first TDD carrier. The second base station may include a second uplink carrier and a second downlink carrier. When the second uplink carrier is an uplink carrier in a second FDD carrier, the second downlink carrier is a downlink carrier in the second FDD carrier. When the second uplink carrier is an uplink slot set of a second TDD carrier, the second downlink carrier is a downlink slot set of the second TDD carrier.

In this application, the first FDD carrier, the second FDD carrier, the first TDD carrier, and the second TDD carrier may be located in different carrier frequency bands. For example, as shown in Table 1, in 4G, the first FDD carrier may be a band 1, the second FDD carrier may be a band 5, the first TDD carrier may be a band 33, and the second TDD carrier may be a band 34.

**Table 1**

| E-UTRA Band | Uplink (UL) eNodeB receive UE transmit | | Downlink (DL) eNodeB transmit UE receive | | UL-DL Band separation $F_{DL\_low}$ - $F_{UL\_high}$ | Duplex Mode |
|---|---|---|---|---|---|---|
| | $F_{UL\_low}$ -- $F_{UL\_high}$ | | $F_{DL\_low}$ - $F_{DL\_high}$ | | | |
| 1 | 1920 MHz | - 1980 MHz | 2110 MHz | - 2170 MHz | 130 MHz | FDD |
| 2 | 1850 MHz | - 1910 MHz | 1930 MHz | - 1990 MHz | 20 MHz | FDD |
| 3 | 1710 MHz | - 1785 MHz | 1805 MHz | - 1880 MHz | 20 MHz | FDD |
| 4 | 1710 MHz | - 1755 MHz | 2110 MHz | - 2155 MHz | 355 MHz | FDD |
| 5 | 824 MHz | - 849 MHz | 869 MHz | - 894 MHz | 20 MHz | FDD |
| 6 | 830 MHz | - 840 MHz | 875 MHz | - 885 MHz | 35 MHz | FDD |
| 7 | 2500 MHz | - 2570 MHz | 2620 MHz | - 2690 MHz | 50 MHz | FDD |
| 8 | 880 MHz | - 915 MHz | 925 MHz | - 960 MHz | 10 MHz | FDD |
| 9 | 1749.9 MHz | - 1784.9 MHz | 1844.9 MHz | - 1879.9 MHz | 60 MHz | FDD |

(continued)

| E-UTRA Band | Uplink (UL) eNodeB receive UE transmit | | Downlink (DL) eNodeB transmit UE receive | | UL-DL Band separation $F_{DL\_low}$ - $F_{UL\_high}$ | Duplex Mode |
|---|---|---|---|---|---|---|
| | $F_{UL\_low}$ - $F_{UL\_high}$ | | $F_{DL\_low}$ - $F_{DL\_high}$ | | | |
| 10 | 1710 MHz | - 1770 MHz | 2110 MHz | - 2170 MHz | 340 MHz | FDD |
| 11 | 1427.9 | - 1452.9 | 1475.9 | - 1500.9 | 23 MHz | FDD |
| | $F_{UL\_low}$ - $F_{UL\_high}$ | | $F_{DL\_low}$ - $F_{DL\_high}$ | | | |
| | MHz | MHz | MHz | MHz | | |
| 12 | [TBD] | - [TBD] | [TBD] | - [TBD] | [TBD] | FDD |
| 13 | [TBD] | - [TBD] | [TBD] | - [TBD] | [TBD] | FDD |
| 14 | [TBD] | - [TBD] | [TBD] | - [TBD] | [TBD] | FDD |
| ... | | | | | | |
| 33 | 1900 MHz | - 1920 MHz | 1900 MHz | - 1920 MHz | N/A | TDD |
| 34 | 2010 MHz | - 2025 MHz | 2010 MHz | - 2025 MHz | N/A | TDD |
| 35 | 1850 MHz | - 1910 MHz | 1850 MHz | - 1910 MHz | N/A | TDD |
| 36 | 1930 MHz | - 1990 MHz | 1930 MHz | - 1990 MHz | N/A | TDD |
| 37 | 1910 MHz | - 1930 MHz | 1910 MHz | - 1930 MHz | N/A | TDD |
| 38 | 2570 MHz | - 2620 MHz | 2570 MHz | - 2620 MHz | N/A | TDD |

It should be understood that, in this application, the first base station and the second base station may be deployed in different frequency bands. For example, the first base station may be deployed in the high frequency band. For example, a frequency band of the first uplink carrier may be 3.4G, a frequency band of the first downlink carrier may be 3.5G, and the first base station may be the NR base station in 5G. Alternatively, the first uplink carrier is an uplink slot set of a 3.5G TDD carrier, and the first downlink carrier is a downlink slot set of the 3.5G TDD carrier. The second base station may be deployed in the low frequency band. For example, a frequency band of the second uplink carrier may be 1.75G, a frequency band of the second downlink carrier may be 1.85G, and the second base station may be the LTE base station in 4G.

In this application, a technical method in this application is described in detail by using an example in which the first base station is deployed in the high frequency band and the second base station is deployed in the low frequency band.

It should be noted that in a wireless communications system, a higher frequency of a carrier indicates a larger path loss. Therefore, uplink coverage of the first base station deployed in the high frequency band is limited (especially for an edge user of the first base station, the limitation is more severe). Therefore, a person in the related art proposes that, when an uplink carrier of the second base station is lightly loaded, an uplink signal may be transmitted to the first base station on the uplink carrier (for example, 1.75G) of the second base station. For the second base station, there is a downlink carrier (for example, 1.85G) that matches the uplink carrier. Therefore, an uplink path loss may be estimated by using the downlink carrier. However, there is no matched second downlink carrier when a terminal camping on the first downlink carrier uses the shared second uplink carrier. Therefore, when the terminal camping on the first downlink carrier transmits an uplink signal by using the shared second uplink carrier, an uplink path loss cannot be accurately estimated. Correspondingly, transmit power of the uplink signal cannot be accurately calculated. In other words, when the terminal camping on the first downlink carrier estimates an uplink path loss of the shared second uplink carrier based on the first downlink carrier, the estimated uplink path loss is excessively large. Consequently, the transmit power of the uplink signal of the terminal camping on the first downlink carrier is excessively large on the shared second uplink carrier, affecting transmission performance of two system uplink signals on the shared second uplink carrier.

Based on the foregoing, this application provides a method for determining transmit power of an uplink signal. According to the method in this application, a path loss may be estimated by using a downlink reference signal on an existing downlink carrier of the first base station, so that when the terminal camping on the first downlink carrier sends an uplink signal on the shared second uplink carrier, transmit power of the uplink signal can be relatively accurately calculated, thereby improving performance of an uplink signal sent to the first base station on the second uplink carrier, and avoiding impact on an uplink signal sent to the second base station on the second uplink carrier.

It should be noted that the first base station and the second base station may be built on a same site, or may be independently built. Terms such as "first" and "second" described in this application are used for differentiation only, and are not used to indicate or imply relative importance or a sequence. An uplink signal in this application may be an uplink signal, or may be an uplink channel.

In the embodiments of this application, some scenarios are described by using a 4G network scenario in a wireless communications network as an example. It should be noted that the solutions in the embodiments of this application may also be applied to another wireless communications network, and a corresponding name may be replaced with a name of a corresponding function in the another wireless communications network.

It should be noted that the method or an apparatus in the embodiments of the present invention may be applied between a wireless network device and user equipment, or between wireless network devices (such as a macro base station and a micro base station), or between user equipments (such as a D2D scenario). In all the embodiments of this application, communication between the wireless network devices is used as an example for description.

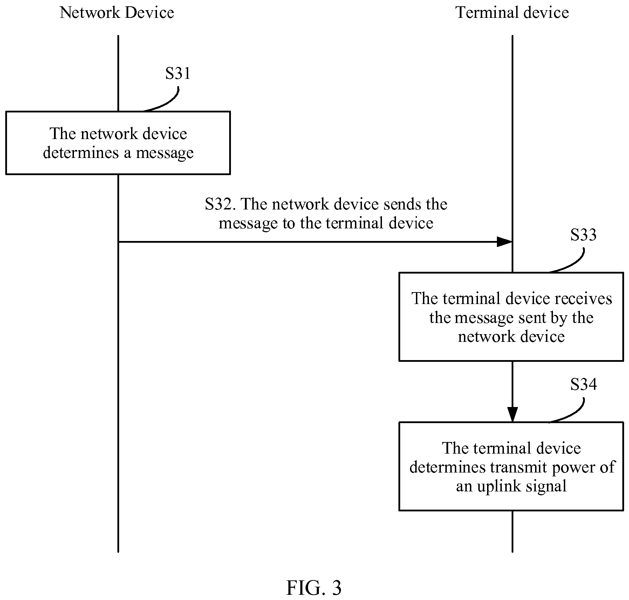

FIG. 3 shows a procedure of a method for determining transmit power of an uplink signal according to this application. A network device in the procedure may correspond to the first base station in FIG. 2, and a terminal device may correspond to the UE in FIG. 2. As shown in FIG. 3, the method includes the following steps.

Step S31. The network device generates a message.

The message carries a first loss parameter related to a first uplink carrier and a second loss parameter related to a second uplink carrier.

Step S32. The network device sends the message to the terminal device.

Optionally, the network device may send the message on a first downlink carrier. The first downlink carrier includes at least one of the following: a downlink carrier in a first FDD carrier and a downlink slot set of a first TDD carrier. When the first uplink carrier is an uplink carrier in the first FDD carrier, the first downlink carrier is the downlink carrier in the first FDD carrier. Alternatively, when the first uplink carrier is an uplink slot set of the first TDD carrier, the first downlink carrier is the downlink slot set of the first TDD carrier.

Step S33. The terminal device receives the message sent by the network device.

Step S34. The terminal device calculates transmit power of an uplink signal.

The uplink signal is sent on the first uplink carrier, and the transmit power of the uplink signal is calculated based on the first loss parameter. Alternatively, the uplink signal is sent on the second uplink carrier, and the transmit power of the uplink signal is calculated based on the second loss parameter.

In this application, how the terminal device calculates the transmit power of the uplink signal may be described by using the following three cases as examples. It should be understood that the following three cases are merely examples for description, and cannot be used to limit the protection scope of this application.

In a first case, the first loss parameter is a first path loss compensation factor, the second loss parameter is a second path loss compensation factor, and values of the first path loss compensation factor and the second path loss compensation factor are different. When sending the uplink signal on the first uplink carrier, the terminal device calculates the transmit power of the uplink signal based on the first path loss compensation factor. Alternatively, when sending the uplink signal on the second uplink carrier, the terminal device calculates the transmit power of the uplink signal based on the second path loss compensation factor.

In a second case, the first loss parameter is a first power ramping factor, the second loss parameter is a second power ramping factor, and values of the first power ramping factor and the second power ramping factor are different. When sending the uplink signal on the first uplink carrier, the terminal device calculates the transmit power of the uplink signal based on the first power ramping factor. Alternatively, when sending the uplink signal on the second uplink carrier, the terminal device calculates the transmit power of the uplink signal based on the second power ramping factor.

In a third case, the first loss parameter is a first path loss adjustment factor, the second loss parameter is a second path loss adjustment factor, and values of the first path loss adjustment factor and the second path loss adjustment factor are different. When sending the uplink signal on the first uplink carrier, the terminal device calculates the transmit power of the uplink signal based on the first path loss adjustment factor. Alternatively, when sending the uplink signal on the second uplink carrier, the terminal device calculates the transmit power of the uplink signal based on the second path loss adjustment factor.

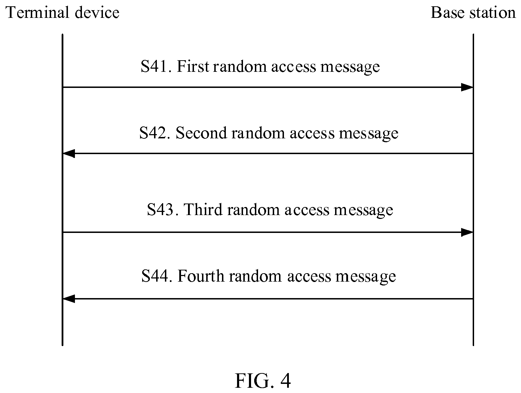

In another feasible embodiment of this application, the foregoing method may be specifically applied to calculation of the transmit power of the uplink signal in a random access process of the terminal device. As shown in FIG. 4, the random access process is as follows:

Step S41: The terminal device sends a first random access message, for example, a message 1 (msg 1) in the random access process, to the network device.

The first random access message may be specifically a preamble (random access preamble).

Step S42: The network device sends a second random access message, for example, a message 2 (msg 2) in the random access process, to the terminal device.

The second random access message may be specifically a RAR (Random Access Response, random access response), and the RAR may be specifically sent after the network device receives the preamble sent by the terminal device.

Step S43: The terminal device sends a third random access message, for example, a message 3 (msg 3) in the random access process, to the network device.

The third random access message is mainly an RRC request. In one case: If the random access process is initial access (initial access), the msg 3 is an RRC connection request transmitted on a CCCH, and needs to carry at least NAS UE identification information. In another case, if the random access process is handover (handover), the msg 3 is an RRC handover confirm on which encryption and integrity protection are performed and that is transmitted on a DCCH, needs to include a C-RNTI of the terminal device (e.g. UE), and if possible, needs to carry a BSR. In another case, if the random access process is RRC connection reestablishment (RRC Connection Re-establishment), the msg 3 is an RRC connection re-establishment request transmitted on a CCCH, and does not carry any NAS message. In another case, for another trigger event, the msg 3 needs to carry at least a C-RNTI.

Step S44: The network device sends a fourth random access message, for example, a message 4 (msg 4) in the random access process, to the terminal device.

The fourth random access message is mainly used for contention resolution, and used to determine a temp CRNTI of the UE to a CRNTI.

The method provided in FIG. 3 may be used to calculate transmit power of the random access preamble, and details are as follows:

First: In the method shown in FIG. 3, the first loss parameter is the first path loss compensation factor, the second loss parameter is the second path loss compensation factor, and calculation of the transmit power of the preamble complies with the following formula:

$$PreambleReceivedTargetPower = preambleInitialReceivedTargetPower +$$

$$deltaPreamble + (preambleTransmissionConter - 1) * powerRampingStep$$

$$P\_PRACH = min\{P\_CMAX, PreambleReceivedTargetPower + alpha(cc)$$

$$* PL\} \text{ formula (1)}$$

P_PRACH represents the transmit power of the random access preamble; P_CMAX represents maximum transmit power of the terminal device; PreambleReceivedTargetPower represents power at which the network device expects to receive the random access preamble; PL represents a downlink path loss that is measured by the terminal device based on a reference signal on the first downlink carrier; preambleInitialReceivedTargetPower represents power at which the network device expects to receive the first random access preamble in the current random access process of the terminal device; deltaPreamble represents an adjustment value related to a type of the random access preamble; preambleTransmissionConter represents a quantity of times of sending the random access preamble by the terminal device in the current random access process; powerRampingStep represents a power ramping factor between random access preambles that are sent by the terminal device at two consecutive times in the current random access process; and alpha(cc) represents the path loss compensation factor.

In this application, when the terminal device sends the random access preamble on the first uplink carrier, a value of alpha(cc) is the first path loss compensation factor. When the terminal device sends the random access preamble on the second uplink carrier, a value of alpha(cc) is the second path loss compensation factor.

It should be noted that, compared with the prior art, an improvement of calculating the transmit power of the uplink signal by using the formula (1) is mainly alpha(cc). PL in the formula (1) is the downlink path loss calculated by the terminal device based on the existing first downlink carrier (for example, 3.5G) of the network device, the downlink path loss is measured based on the reference signal on the first downlink carrier, and the downlink reference signal may be a cell-specific reference signal CRS, a channel state information reference signal CSI-RS, a synchronization signal block SS-block, or the like. For example, the terminal device receives the reference signal on the first downlink carrier, and then calculates the downlink path loss of the terminal device on the first downlink carrier based on the reference signal. When the terminal device sends the random access preamble on the first uplink carrier, a value of alpha(cc) is 1. The first downlink carrier matches the first uplink carrier. For example, the first downlink carrier matches the first uplink carrier in frequency domain. This may be defined as in the RAN4 in LTE that the first downlink carrier and the first uplink carrier belong to one band. For example, the first downlink carrier is 3.5G, and the first uplink carrier is 3.4G. Alternatively, the first downlink carrier matches the first uplink carrier in time domain. For example, if the first downlink carrier is a downlink slot set of a first carrier, the first uplink carrier is an uplink slot set of the first carrier. When the terminal device sends the random access code on the second uplink carrier, a value of alpha(cc) is not 1, and the second uplink carrier does not match the first downlink carrier (where that the second uplink carrier does not match the first downlink carrier mainly means that a frequency spacing between the second uplink carrier and the first downlink carrier is relatively large, and an uplink path loss estimated based on the downlink path loss is no longer accurate). For an explanation about that the second uplink carrier does not match the first downlink carrier, refer to the foregoing explanation about that the first uplink carrier matches the first downlink carrier. In this application, for example, the second uplink carrier may be 1.75G, and the first downlink carrier may be 3.5G. In this application, when a frequency of the second uplink carrier is greater than a frequency of the first uplink carrier, alpha(cc) is greater than 1, and a larger difference between the two frequencies indicates a larger value of alpha(cc). When a frequency of the second uplink carrier is less than the frequency of the first uplink carrier, alpha(cc) is less than 1, and a larger difference between the two frequencies indicates a smaller value of alpha(cc).

Second: In the method shown in FIG. 3, the first loss parameter is the first power ramping factor, the second loss parameter is the second power ramping factor, and calculation of the transmit power of the random access code complies with the following formula:

$$\text{PreambleReceivedTargetPower} = \text{preambleInitialReceivedTargetPower} +$$

$$\text{deltaPreamble} + (\text{preambleTransmissionConter} - 1) * \text{powerRampingStep(cc)}$$

$$\text{P\_PRACH} = \min\{\text{P\_CMAX}, \text{PreambleReceivedTargetPower} + \text{PL}\}$$

$$\text{formula (2)}$$

P_PRACH represents the transmit power of the random access preamble; P_CMAX represents maximum transmit power of the terminal device; PreambleReceivedTargetPower represents power at which the network device expects to receive the random access preamble; PL represents a downlink path loss of the terminal device, the downlink path loss is measured based on a reference signal on the first downlink carrier, and the downlink reference signal may be a cell-specific reference signal CRS, a channel state reference information CSI-RS, a synchronization signal block SS-block, or the like; preambleInitialReceivedTargetPower represents power at which the network device expects to receive the first random access preamble in the current random access process of the terminal device; deltaPreamble represents an adjustment value related to a type of the random access preamble; preambleTransmissionConter represents a quantity of times of sending the random access preamble by the terminal device in the current random access process; and powerRampingStep(cc) represents the power ramping factor of the random access preamble.

In this application, when the terminal device sends the random access preamble on the first uplink carrier, a value of powerRampingStep(cc) is the first path loss compensation factor. When the terminal device sends the random access preamble on the second uplink carrier, a value of powerRampingStep(cc) is the second path loss compensation factor.

It should be noted that, compared with the prior art, an improvement of calculating the transmit power of the uplink signal by using the formula (2) is mainly powerRampingStep(cc). PL in the formula (2) is the downlink path loss calculated by the terminal device based on the existing first downlink carrier (for example, 3.5G) of the network device. In this application, when the terminal device sends the random access preamble on a first uplink carrier F1, the value of powerRampingStep(cc) is the same as a value for calculating an uplink path loss in the prior art and is assumed as powerRampingStep(cc-F1), and the first uplink carrier matches the first downlink carrier. When the terminal device sends the random access preamble on a second uplink carrier F2, the second uplink carrier does not match the first downlink carrier. If a frequency F2 of the second uplink carrier is less than a frequency F1 of the first uplink carrier, a value of powerRampingStep(cc_F2) is less than a value of powerRampingStep(cc-F1). If a frequency F2 of the second uplink carrier is greater than a frequency F1 of the first uplink carrier, a value of powerRampingStep(cc_F2) is greater than a value of powerRampingStep(cc-Fl).

Third: In the method shown in FIG. 3, the first loss parameter is the first path loss adjustment factor, the second loss parameter is the second path loss adjustment factor, and calculation of the transmit power of the random access code complies with the following formula:

$$PreambleReceivedTargetPower = preambleInitialReceivedTargetPower +$$

$$deltaPreamble + (preambleTransmissionConter - 1) * powerRampingStep + delta(cc, PL)$$

$$P\_PRACH = min\{P\_CMAX, PreambleReceivedTargetPower + PL\}$$

formula (3)

P_PRACH represents the transmit power of the random access preamble; P_CMAX represents maximum transmit power of the terminal device; PreambleReceivedTargetPower represents power at which the network device expects to receive the random access preamble; PL represents a downlink path loss of the terminal device, the downlink path loss is measured based on a reference signal on the first downlink carrier, and the downlink reference signal may be a cell-specific reference signal CRS, a channel state reference information CSI-RS, a synchronization signal block SS-block, or the like; preambleInitialReceivedTargetPower represents power at which the network device expects to receive the first random access preamble in the current random access process of the terminal device; deltaPreamble represents an adjustment value related to a type of the random access preamble; preambleTransmissionConter represents a quantity of times of sending the random access preamble by the terminal device in the current random access process; powerRampingStep represents power ramping factor between random access preambles that are sent by the terminal device at two consecutive times in the current random access process; and delta(cc, PL) represents the path loss adjustment factor.

In this application, when the terminal device sends the random access preamble on the first uplink carrier, a value of delta(cc, PL) is the first path loss adjustment factor. When the terminal device sends the random access preamble on the second uplink carrier, a value of delta(cc, PL) is the second path loss adjustment factor.

It should be noted that, compared with the prior art, an improvement of calculating the transmit power of the uplink signal by using the formula (3) is mainly delta(cc, PL). PL in the formula (3) is the downlink path loss calculated by the terminal device based on the existing first downlink carrier (for example, 3.5G) of the network device. When the terminal device sends the random access preamble on the first uplink carrier, the value of delta(cc, PL) is 0, and the first uplink carrier matches the first downlink carrier. When the terminal device sends the random access preamble on the second uplink carrier, the value of delta(cc, PL) is not 0, and the second uplink carrier does not match the first downlink carrier. If a frequency of the second uplink carrier is greater than a frequency of the first uplink carrier, delta(cc, PL) is greater than 0, and a larger difference between the frequencies of the second uplink carrier and the first uplink carrier indicates a larger value of delta(cc, PL). If a frequency of the second uplink carrier is less than a frequency of the first uplink carrier, delta(cc, PL) is less than 0, and a larger difference between the frequencies of the second uplink carrier and the first uplink carrier indicates a smaller value of delta(cc, PL). In addition, a larger downlink path loss value measured by the terminal device based on the first downlink carrier indicates a larger absolute value of delta(cc, PL). For example, when the first uplink carrier is less than the second uplink carrier, as shown in Table 2, a larger difference between the first uplink carrier and the second uplink carrier indicates a smaller value of the delta(cc, PL).

**Table 2**

| Downlink path loss based on a first downlink carrier/dB | delta(cc, PL)/dB |
|---|---|
| 0 to 10 | -1 |
| 10 to 20 | -2 |

It should be understood that, the path loss compensation factor alpha(cc) in the first example, the power ramping factor powerRampingStep(cc) in the second example, and the path loss adjustment factor delta(cc, PL) in the third example are related names in a 4G LTE application scenario. In a future mobile communications system, for example, in 5G, carrier-related variables in the foregoing formulas may have different names, and the names may be embodied in corresponding power control formulas. Therefore, all these names should fall within the protection scope of this application.

In another feasible embodiment of this application, a method for determining transmit power of an uplink signal is provided. A main principle of the method is as follows: A terminal device reports, to a network side device, a parameter that represents transmit power of uplink data. After receiving the parameter of the transmit power, the network side device calculates the transmit power of the uplink data based on the parameter, finally, calculates an uplink path loss of the terminal device based on a difference between the transmit power and receive power of the uplink data, and sends the uplink path loss to the terminal device. The terminal device determines transmit power of an uplink signal based on the uplink path loss. The uplink signal may be an uplink signal, or may be an uplink channel.

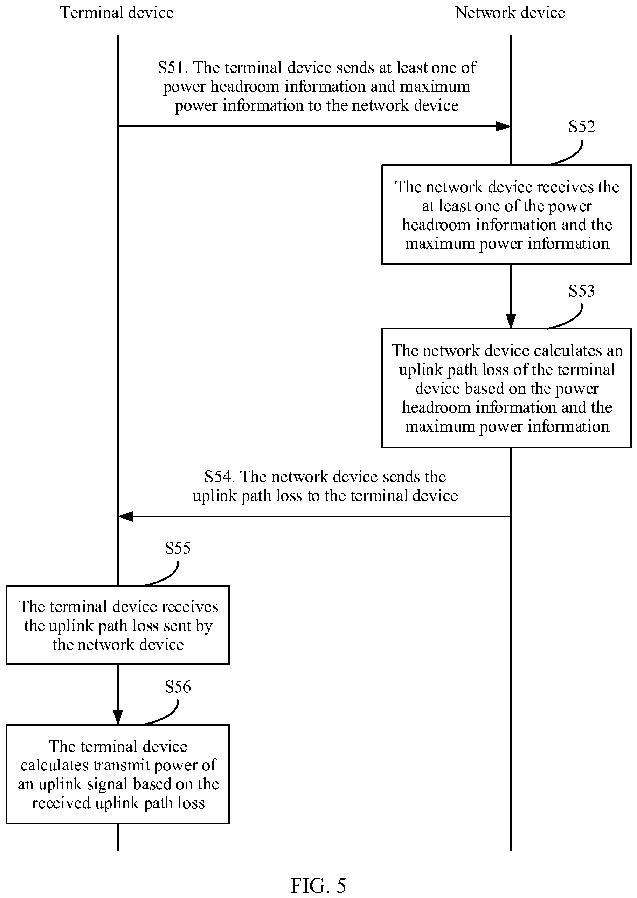

FIG. 5 shows a procedure of a method for determining transmit power of an uplink signal according to this application. A terminal device in the procedure may correspond to the UE in FIG. 2, and a network device may correspond to the first base station or the second base station in FIG. 2. As shown in FIG. 5, the method includes the following steps.

Step S51. The terminal device sends at least one of power headroom information PHR and maximum power information $P_{CMAX}$ to the network device.

The information PHR and $P_{CMAX}$ are used by the network device to calculate an uplink path loss of the terminal device. The PHR is obtained based on maximum power at which the terminal device is capable of sending an uplink signal and theoretical power at which the terminal device sends uplink shared data.

In this application, a PHR calculation process is described in detail by using an example in which the terminal device sends the uplink shared data on a PUSCH (Physical Uplink Shared Channel, physical uplink shared channel).

$$PHR = P_{\_CMAX} - P_{\_PUSCH} \quad \text{formula (4)}$$

In the formula (4), PHR represents power headroom, $P_{CMAX}$ is the maximum power at which the terminal device is capable of sending the signal, and $P_{PUSCH}$ is a value of the theoretical power at which the terminal device sends the uplink shared data on the PUSCH.

$$P_{PUSCH} = 10\log_{10}(M_{PUSCH}) + P_{O\_PUSCH} + \alpha_c * PL + \Delta_{TF} + f$$

formula (5)

In the formula (5), $M_{PUSCH}$ is a quantity of PRBs scheduled on the PUSCH, $P_{O\_PUSCH}$ is power that a cell expects to receive, $\alpha_c$ is a path loss compensation factor, $\Delta_{TF}$ is an adjustment value of an MCS used for PUSCH transmission, f is a closed-loop power control adjustment value, and is controlled by using DCI, and PL is a path loss that is measured by the terminal device based on a reference signal on a first downlink carrier.

In this application, the terminal device sends both the PHR and the $P_{CMAX}$ to the network device, or may send only the PHR to the network device.

Step S52. The network device receives the at least one of the power headroom information and the maximum power information.

Step S53. The network device calculates the uplink path loss of the terminal device based on the power headroom information and the maximum power information.

In this application, calculation of the uplink path loss by the network device complies with the following formulas:

when the PHR received by the network device is a positive value or 0, actual transmit power = $P_{CMAX}$ - PHR, and the uplink path loss = the actual transmit power -actual receive power; or
when the PHR received by the network device is a negative value, actual transmit power = $P_{CMAX}$, and the uplink path loss = the actual transmit power -actual receive power.

Step S54. The network device sends the uplink path loss to the terminal device.

Step S55. The terminal device receives the uplink path loss that is sent by the network device.

Step S56. The terminal device calculates transmit power of the uplink signal based on the received uplink path loss.

Optionally, the sending, by the terminal device, at least one of power headroom information and maximum power information to the network device includes: sending, by the terminal device, a third random access message to the network device, where the third random access message carries the at least one of the power headroom information and the maximum power information. The third random access message may be the msg 3 in FIG. 4. The receiving, by the terminal device, the uplink path loss sent by the network device includes: receiving, by the terminal device, a fourth random access message sent by the network device, where the fourth random access message carries the uplink path loss. The fourth random access message may be the msg 4 in FIG. 4.

Optionally, the sending, by the terminal device, at least one of power headroom information and maximum power information to the network device includes: sending, by the terminal device, uplink data to the network device, where the uplink data carries higher layer signaling, and the higher layer signaling includes the at least one of the power headroom information and the maximum power information. The receiving, by the terminal device, the uplink path loss sent by the network device includes: receiving, by the terminal device, downlink data sent by the network device, where the downlink data carries higher layer signaling, and the higher layer signaling includes the uplink path loss. The higher layer signaling may be MAC CE signaling or RRC signaling.

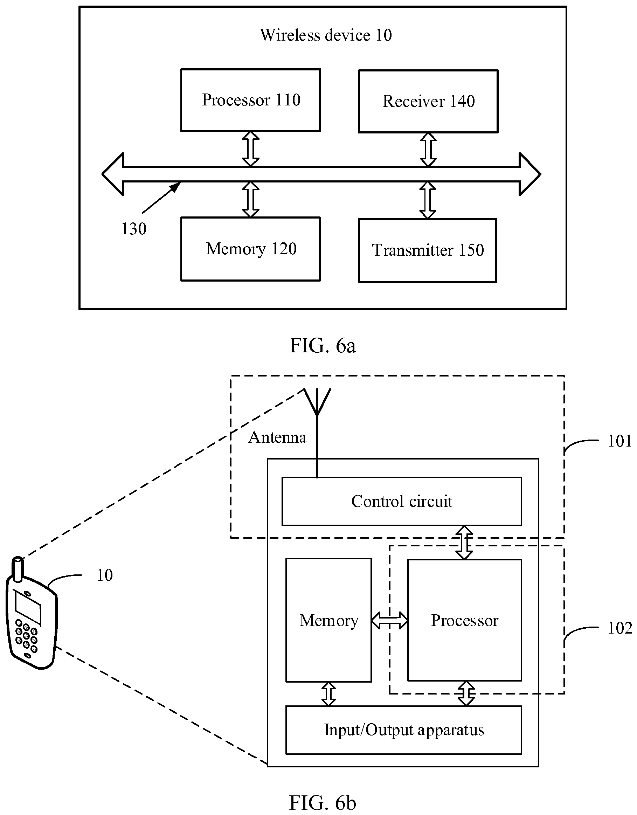

According to the foregoing method, as shown in FIG. 6a, this application further provides a device for determining transmit power of an uplink signal. The device may be a wireless device 10. The wireless device 10 (e.g. UE) may correspond to the terminal device in the foregoing method.

The device may include a processor 110 and a memory 120. Further, the device may include a receiver 140 and a transmitter 150. Further, the device may include a bus system 130. The processor 110, the memory 120, the receiver 140, and the transmitter 150 may be connected to each other via the bus system 130.

The memory 120 is configured to store an instruction, and the processor 110 is configured to execute the instruction stored in the memory 120, to control the receiver 140 to receive a signal and control the transmitter 150 to send a signal, thereby completing steps of the terminal device in the foregoing method. The receiver 140 and the transmitter 150 may be a same physical entity or different physical entities. When being a same physical entity, the receiver 140 and the transmitter 150 may be collectively referred to as a transceiver. The memory 120 may be integrated into the processor 110, or may be separate from the processor 110.

In an implementation, it may be considered that functions of the receiver 140 and the transmitter 150 are implemented by using a transceiver circuit or a dedicated transceiver chip. It may be considered that the processor 110 is implemented by using a dedicated processing chip, a processing circuit, a processor, or a general chip.

In another implementation, it may be considered that the wireless device provided in this embodiment of the present invention is implemented by using a general-purpose computer. To be specific, program code for implementing functions of the processor 110, the receiver 140, and the transmitter 150 is stored in the memory. A general-purpose processor implements the functions of the processor 110, the receiver 140, and the transmitter 150 by executing the code in the memory.

For concepts, explanations, detailed descriptions, and other steps of the device that are related to the technical solutions provided in the embodiments of this application, refer to descriptions about the content in the foregoing method or another embodiment. Details are not described herein again.

FIG. 6b is a schematic structural diagram of user equipment UE. The UE may be applied to the system shown in FIG. 2 and/or the scenario shown in FIG. 1. For ease of description, FIG. 6 shows only main components of the user equipment. As shown in FIG. 6b, a terminal device 600 includes a processor, a memory, a control circuit, an antenna, and an input/output apparatus. The processor is mainly configured to: process a communication protocol and communication data, control the entire user equipment, execute a software program, and process data of the software program, for example, configured to support the UE in performing an action described in FIG. 3 or FIG. 5. The memory is mainly configured to store the software program and the data, for example, store a codebook described in the foregoing embodiment. The control circuit is mainly configured to perform conversion between a baseband signal and a radio frequency signal, and process the radio frequency signal. A combination of the control circuit and the antenna may also be referred to as a transceiver that is mainly configured to receive and send a radio frequency signal in an electromagnetic wave form. The input/output apparatus such as a touchscreen, a display screen, or a keyboard is mainly configured to receive data entered by a user, and output data to the user.

After the terminal device is powered on, the processor may read the software program in a storage unit (e.g. the memory), explain and execute an instruction of the software program, and process the data of the software program. When data needs to be wirelessly sent, the processor performs baseband processing on the to-be-sent data, and outputs a baseband signal to a radio frequency circuit. After the radio frequency circuit performs radio frequency processing on the baseband signal, a radio frequency signal is sent by using the antenna in an electromagnetic wave form. When data is sent to the user equipment, the radio frequency circuit receives a radio frequency signal by using the antenna, converts the radio frequency signal into a baseband signal, and outputs the baseband signal to the processor. The processor converts the baseband signal into data and processes the data.

A person skilled in the art may understand that for ease of description, FIG. 6b shows only one memory and only one processor. In actual user equipment, there may be a plurality of processors and a plurality of memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to: control the entire user equipment, execute the software program, and process the data of the software program. The processor in FIG. 6b integrates functions of the baseband processor and the central processing unit. A person skilled in the art may understand that the baseband processor and the central processing unit may be separate processors, and are interconnected by using a technology such as a bus. A person skilled in the art may understand that the user equipment may include a plurality of baseband processors to adapt to different network standards, the user equipment may include a plurality of central processing units to enhance a processing capability of the user equipment, and components of the user equipment may be connected via various buses. The baseband processor may also be expressed as a baseband processing circuit or a baseband processing chip. The central processing unit may also be expressed as a central processing circuit or a central processing chip. A function of processing the communication protocol and the communication data may be embedded into the processor, or may be stored in the storage unit in a form of a software program. The processor executes the software program to implement a baseband processing function.

For example, in this embodiment of the present invention, the antenna with receiving and sending functions and the control circuit may be considered as a transceiver unit 101 of the UE 600, and the processor with a processing function is considered as a processing unit 102 of the UE 600. As shown in FIG. 6b, the UE 600 includes the transceiver unit 101 and the processing unit 102. The transceiver unit may also be referred to as a transceiver, a transceiver apparatus, or the like. Optionally, a component that is in the transceiver unit 101 and that is configured to implement a receiving function may be considered as a receiving unit, and a component that is in the transceiver unit 101 and that is configured to implement a sending function may be considered as a sending unit. In other words, the transceiver unit 101 includes a receiving unit and a sending unit. For example, the receiving unit may also be referred to as a rcccivcr, a receiver circuit, or the like, and the sending unit may be referred to as a transmitter, a transmit circuit, or the like.

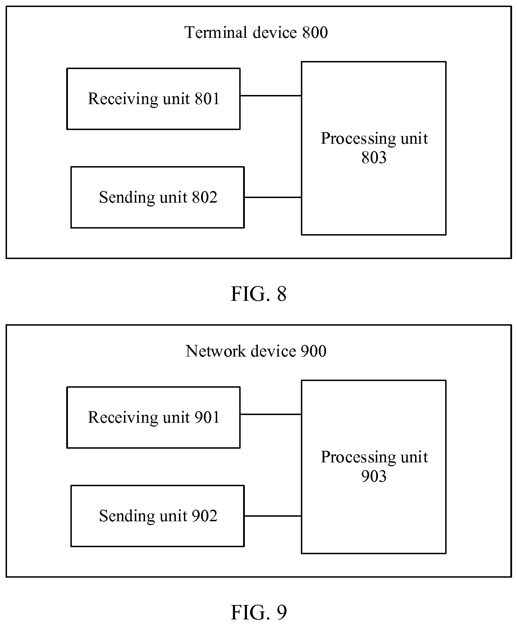

As shown in FIG. 8, this application further provides a terminal device 800.

In an example, the terminal device 800 may include a receiving unit 801 and a processing unit 803.

The receiving unit 801 is configured to receive a message sent by a network device, where the message carries a first loss parameter related to a first uplink carrier and a second loss parameter related to a second uplink carrier. The processing unit 803 is configured to calculate transmit power of an uplink signal, where the uplink signal is sent on the first uplink carrier, and the transmit power of the uplink signal is calculated based on the first loss parameter related to the first uplink carrier; or the uplink signal is sent on the second uplink carrier, and the transmit power of the uplink signal is calculated based on the second loss parameter related to the second uplink carrier.

It should be understood that, in this example, the terminal device 800 may further include a sending unit 802.

In another example, the terminal device 800 may include a receiving unit 801, a processing unit 803, and a sending unit 802.

The sending unit 802 is configured to send at least one of power headroom information and maximum power information to a network device, where the power headroom information is obtained based on maximum power at which the terminal device is capable of sending an uplink signal and theoretical power at which the terminal device sends uplink shared data, the theoretical power of the uplink shared data is calculated based on a downlink path loss of the terminal device, and the maximum power information is obtained based on the maximum power at which the terminal device is capable of sending the uplink signal. The receiving unit 801 is configured to receive an uplink path loss sent by the network device. The processing unit 803 is configured to calculate transmit power of the uplink signal based on the received uplink path loss.

It should be understood that, a function of the receiving unit 801 may be implemented by the transmitter in FIG. 6a or FIG. 6b, a function of the sending unit 802 may be implemented by the receiver in FIG. 6a or FIG. 6b, and a function of the processing unit 803 may be implemented by the processor in FIG. 6a or FIG. 6b.

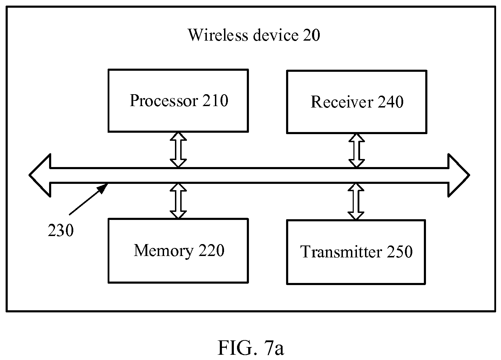

According to the foregoing method, as shown in FIG. 7a, an embodiment of the present invention further provides another device for determining transmit power of an uplink signal. The device may be a wireless device 20. The wireless device 20 corresponds to the network device in the foregoing method. It may be understood that the wireless device 20 may alternatively be another device. This is not limited herein.

The device may include a processor 210 and a memory 220. Further, the device may include a receiver 240 and a transmitter 250. Further, the device may include a bus system 230.

The processor 210, the memory 220, the receiver 240, and the transmitter 250 are connected to each other via the bus system 230. The memory 220 is configured to store an instruction. The processor 210 is configured to: execute the instruction stored in the memory 220, to control the receiver 240 to receive a signal and control the transmitter 250 to send a signal, thereby completing steps of the network device in the foregoing method. The receiver 240 and the transmitter 250 may be a same physical entity or different physical entities. When being a same physical entity, the receiver 240 and the transmitter 250 may be collectively referred to as a transceiver. The memory 220 may be integrated into the processor 210, or may be separate from the processor 210.

In an implementation, it may be considered that functions of the receiver 240 and the transmitter 250 are implemented by using a transceiver circuit or a dedicated transceiver chip. It may be considered that the processor 210 may be implemented by using a dedicated processing chip, a processing circuit, a processor, or a general chip.

In another implementation, it may be considered that the wireless device provided in this embodiment of the present invention is implemented by using a general-purpose computer. To be specific, program code that is used to implement functions of the processor 210, the receiver 240, and the transmitter 250 is stored in the memory. A general-purpose processor implements the functions of the processor 210, the receiver 240, and the transmitter 250 by executing the code in the memory.

For concepts, explanations, detailed descriptions, and other steps of the device that are related to the technical solutions provided in the embodiments of the present invention, refer to descriptions about the content in the foregoing method or another embodiment. Details are not described herein again.

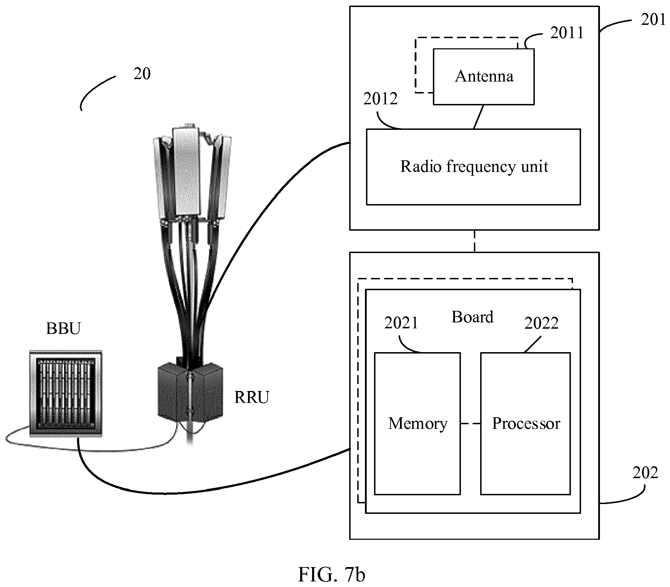

According to the foregoing method, as shown in FIG. 7b, an embodiment of the present invention further provides a schematic structural diagram of a wireless network device, such as a base station.

The base station may be applied to the system shown in FIG. 2. The first base station or the second base station may include one or more radio frequency units, such as a remote radio unit (remote radio unit, RRU) 201, and one or more baseband units (baseband unit, BBU) (also referred to as digital units, digital unit, DU) 202. The RRU 201 may be referred to as a transceiver unit, a transceiver, a transceiver circuit, a transceiver, or the like, and may include at least one antenna 2011 and at least one radio frequency unit 2012. The RRU 201 is mainly configured to receive and send a radio frequency signal and perform conversion between the radio frequency signal and a baseband signal, for example, send the signaling indication and/or reference signal in the foregoing embodiments to user equipment. The BBU 202 is mainly configured to perform baseband processing, control the base station, and so on. The RRU 201 and the BBU 202 may be physically disposed together, or may be physically disposed separately, in other words, the base station may be a distributed base station.

The BBU 202 is a control center of the base station, may also be referred to as a processing unit, and is mainly configured to complete baseband processing functions such as channel coding, multiplexing, modulation, and spectrum spreading. For example, the BBU (the processing unit) may be configured to control the base station to perform the procedure shown in FIG. 3.

In an example, the BBU 202 may include one or more boards, and a plurality of boards may jointly support a radio access network (such as an LTE network) of a single access standard, or may separately support radio access networks of different access standards. The BBU 202 further includes a memory 2021 and a processor 2022. The memory 2021 is configured to store a necessary instruction and necessary data. For example, the memory 2021 stores a correspondence between transmission delay difference information and a transmission delay difference in the foregoing embodiment. The processor 2022 is configured to control the base station to perform a necessary action, for example, control the base station to perform the action shown in FIG. 3. The memory 2021 and the processor 2022 may serve one or more boards. In other words, a memory and a processor may be disposed on each board. Alternatively, a plurality of boards may share a same memory and a same processor. In addition, each board may further be provided with a necessary circuit.

As shown in FIG. 9, this application further provides a network device 900.

In an example, the network device 900 includes a sending unit 902 and a processing unit 903.

The processing unit 903 is configured to generate a message, where the message carries a first loss parameter related to a first uplink carrier and a second loss parameter related to a second uplink carrier. The sending unit 902 is configured to send the message to a terminal device.

It should be understood that, in this example, the terminal device 900 may further include a receiving unit 901.

In another example, the network device 900 may include a receiving unit 902, a sending unit 902, and a processing unit 903.

The receiving unit 901 is configured to receive at least one of power headroom information and maximum power information that are sent by a terminal device, where the power headroom information is obtained based on maximum power at which the terminal device is capable of sending an uplink signal and theoretical power at which the terminal device sends uplink shared data, the theoretical power of the uplink shared data is calculated based on a downlink path loss of the terminal device, and the maximum power information is obtained based on the maximum power at which the terminal device is capable of sending the uplink signal. The processing unit 903 is configured to determine an uplink path loss of the terminal device based on the power headroom information and the maximum power information. The sending unit 902 is configured to send the uplink path loss to the terminal device.

It should be understood that, in the foregoing two examples, a function of the receiving unit 901 may be implemented by the transmitter in FIG. 7a or FIG. 7b, a function of the sending unit 902 may be implemented by the receiver in FIG. 7a or FIG. 7b, and a function of the processing unit 903 may be implemented by the processor in FIG. 7a or FIG. 7b.

According to the methods provided in the embodiments of the present invention, an embodiment of the present invention further provides a communications system, including the wireless network device and one or more user equipments.

This application further provides a computer-readable storage medium. The computer-readable storage medium stores an instruction, and when the instruction is run on a computer, the computer is enabled to perform the foregoing method for determining transmit power of an uplink signal.

It should be understood that in the embodiments of the present invention, the processor may be a central processing unit (Central Processing Unit, "CPU" for short). Alternatively, the processor may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

The memory may include a read-only memory and a random access memory, and provide an instruction and data for the processor. A part of the memory may further include a non-volatile random access memory.

In addition to a data bus, the bus system may further include a power bus, a control bus, a status signal bus, and the like. However, for clear description, various types of buses in the figures are marked as the bus system.

In an implementation process, the steps in the foregoing methods may be completed by using an integrated logic circuit in a hardware form in the processor, or by using an instruction in a software form. The steps of the methods disclosed with reference to the embodiments of the present invention may be directly performed and completed by a hardware processor, or may be performed and completed by a combination of hardware and a software module in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information from the memory and completes the steps in the foregoing methods in combination with hardware of the processor. To avoid repetition, details are not described herein.

It should further be understood that the "first", "second", "third", and "fourth" and various digital numbers in this specification are merely for differentiation for ease of description, and are not intended to limit the scope of the embodiments of the present invention.

It should be understood that the term "and/or" in this specification describes only an association relationship for describing associated objects and represents that three relationships may exist. For example, A and/or B may represent the following three cases: only A exists, both A and B exist, and only B exists. In addition, the character "/" in this specification usually indicates an "or" relationship between the associated objects.

It should be understood that in various embodiments of the present invention, sequence numbers of each process do not mean a chronological order of execution. The chronological orders of execution of the processes should be determined based on functions and internal logic of the processes, and shall not constitute any limitation on the implementation processes of the embodiments of the present invention.

A person of ordinary skill in the art may be aware that, various illustrative logical blocks (illustrative logical block) and steps (step) that are described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that such implementation goes beyond the scope of the present invention.

A person skilled in the art may clearly aware that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units may be integrated into one unit.

The foregoing embodiments may be implemented completely or partially by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedures or functions according to the embodiments of the present invention are completely or partially generated. The computer may be a general-purpose computer, a special-purpose computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk Solid State Disk (SSD)), or the like.

The foregoing descriptions are only specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A method for determining transmit power of an uplink signal, comprising:

   Receiving (S33), by a terminal device (800), a message sent by a network device (900), wherein the message carries a first loss parameter related to a first uplink carrier and a second loss parameter related to a second uplink carrier;
   Calculating (S34), by the terminal device (800), transmit power of an uplink signal, wherein the uplink signal is sent on the first uplink carrier, and the transmit power of the uplink signal is calculated based on the first loss parameter related to the first uplink carrier; or the uplink signal is sent on the second uplink carrier, and the transmit power of the uplink signal is calculated based on the second loss parameter related to the second uplink carrier;
   Sending (S51), by the terminal device (800), a maximum power information to the network device (900);
   wherein the first loss parameter is a first power ramping factor, the second loss parameter is a second power ramping factor, and values of the first power ramping factor and the second power ramping factor are different; and
   the calculating, by the terminal device (800), transmit power of an uplink signal comprises:

      when sending the uplink signal on the first uplink carrier, calculating, by the terminal device (800), the transmit power of the uplink signal based on the first power ramping factor; or
      when sending the uplink signal on the second uplink carrier, calculating, by the terminal device (800), the transmit power of the uplink signal based on the second power ramping factor.

2. A terminal device (800), comprising:

   a receiving unit (801), configured to receive a message sent by a network device (900), wherein the message carries a first loss parameter related to a first uplink carrier and a second loss parameter related to a second uplink carrier;
   a processing unit (803), configured to calculate transmit power of an uplink signal, wherein the uplink signal is sent on the first uplink carrier, and the transmit power of the uplink signal is calculated based on the first loss parameter related to the first uplink carrier; or the uplink signal is sent on the second uplink carrier, and the transmit power of the uplink signal is calculated based on the second loss parameter related to the second uplink carrier;
   a sending unit (802), configured to send a maximum power information to the network device (900);
   wherein the first loss parameter is a first power ramping factor, the second loss parameter is a second power ramping factor, and values of the first power ramping factor and the second power ramping factor are different; and
   when calculating the transmit power of the uplink signal, the processing unit is specifically configured to:

      when the uplink signal is sent on the first uplink carrier, calculate the transmit power of the uplink signal based on the first power ramping factor; or
      when the uplink signal is sent on the second uplink carrier, calculate the transmit power of the uplink signal based on the second power ramping factor.

**Patentansprüche**

1. Verfahren zum Bestimmen der Übertragungsleistung eines Uplink-Signals, umfassend:

Empfangen (S33) einer durch eine Netzwerkvorrichtung (900) gesendeten Nachricht durch eine Endgerätevorrichtung (800), wobei die Nachricht einen ersten Verlustparameter im Zusammenhang mit einem ersten Uplink-Träger und einen zweiten Verlustparameter im Zusammenhang mit einem zweiten Uplink-Träger trägt;

Berechnen (S34) der Übertragungsleistung eines Uplink-Signals durch die Endgerätevorrichtung (800), wobei das Uplink-Signal auf dem ersten Uplink-Träger gesendet wird und die Übertragungsleistung des Uplink-Signals basierend auf dem ersten Verlustparameter im Zusammenhang mit dem ersten Uplink-Träger berechnet wird; oder wobei das Uplink-Signal auf dem zweiten Uplink-Träger gesendet wird und die Übertragungsleistung des Uplink-Signals basierend auf dem zweiten Verlustparameter im Zusammenhang mit dem zweiten Uplink-Träger berechnet wird;

Senden (S51) einer Maximalleistungsinformation durch die Endgerätevorrichtung (800) an die Netzwerkvorrichtung (900);

wobei der erste Verlustparameter ein erster Leistungsrampenfaktor ist, der zweite Verlustparameter ein zweiter Leistungsrampenfaktor ist und Werte des ersten Leistungsrampenfaktors und des zweiten Leistungsrampenfaktors unterschiedlich sind; und

das Berechnen der Übertragungsleistung eines Uplink-Signals durch die Endgerätevorrichtung (800) Folgendes umfasst:

beim Senden des Uplink-Signals auf dem ersten Uplink-Träger, Berechnen der Übertragungsleistung des Uplink-Signals basierend auf dem ersten Leistungsrampenfaktor durch die Endgerätevorrichtung (800); oder

beim Senden des Uplink-Signals auf dem zweiten Uplink-Träger, Berechnen der Übertragungsleistung des Uplink-Signals basierend auf dem zweiten Leistungsrampenfaktor durch die Endgerätevorrichtung (800).

2. Endgerätevorrichtung (800), umfassend:

eine Empfangseinheit (801), die dazu konfiguriert ist, eine durch eine Netzwerkvorrichtung (900) gesendete Nachricht zu empfangen, wobei die Nachricht einen ersten Verlustparameter im Zusammenhang mit einem ersten Uplink-Träger und einen zweiten Verlustparameter im Zusammenhang mit einem zweiten Uplink-Träger trägt;

eine Verarbeitungseinheit (803), die dazu konfiguriert ist, die Übertragungsleistung eines Uplink-Signals zu berechnen, wobei das Uplink-Signal auf dem ersten Uplink-Träger gesendet wird und die Übertragungsleistung des Uplink-Signals basierend auf dem ersten Verlustparameter im Zusammenhang mit dem ersten Uplink-Träger berechnet wird; oder wobei das Uplink-Signal auf dem zweiten Uplink-Träger gesendet wird und die Übertragungsleistung des Uplink-Signals basierend auf dem zweiten Verlustparameter im Zusammenhang mit dem zweiten Uplink-Träger berechnet wird;

eine Sendeeinheit (802), die dazu konfiguriert ist, eine Maximalleistungsinformation an die Netzwerkvorrichtung (900) zu senden;

wobei der erste Verlustparameter ein erster Leistungsrampenfaktor ist, der zweite Verlustparameter ein zweiter Leistungsrampenfaktor ist und Werte des ersten Leistungsrampenfaktors und des zweiten Leistungsrampenfaktors unterschiedlich sind; und

beim Berechnen der Übertragungsleistung des Uplink-Signals, die Verarbeitungseinheit spezifisch zu Folgendem konfiguriert ist:

wenn das Uplink-Signal auf dem ersten Uplink-Träger gesendet wird, Berechnen der Übertragungsleistung des Uplink-Signals basierend auf dem ersten Leistungsrampenfaktor; oder

wenn das Uplink-Signal auf dem zweiten Uplink-Träger gesendet wird, Berechnen der Übertragungsleistung des Uplink-Signals basierend auf dem zweiten Leistungsrampenfaktor.

**Revendications**

1. Procédé de détermination de puissance d'émission d'un signal de liaison montante, comprenant :

la réception (S33), par un dispositif terminal (800), d'un message envoyé par un dispositif de réseau (900), dans lequel le message transporte un premier paramètre de perte relatif à une première porteuse de liaison montante et un second paramètre de perte relatif à une seconde porteuse de liaison montante ;

le calcul (S34), par le dispositif terminal (800), d'une puissance de transmission d'un signal de liaison montante, dans lequel le signal de liaison montante est envoyé sur la première porteuse de liaison montante, et la puissance de transmission du signal de liaison montante est calculé sur la base du premier paramètre de perte relatif à la première porteuse de liaison montante ; ou le signal de liaison montante est envoyé sur la seconde porteuse de liaison montante, et la puissance de transmission du signal de liaison montante est calculé sur la base du second paramètre de perte relatif à la seconde porteuse de liaison montante ;

l'envoi (S51), par le dispositif terminal (800), d'une information de puissance maximale au dispositif de réseau (900) ;

dans lequel le premier paramètre de perte est un premier facteur de rampe de puissance, le second paramètre de perte est un second facteur de rampe de puissance, et des valeurs du premier facteur de rampe de puissance et du second facteur de rampe de puissance sont différentes ; et

le calcul, par le dispositif terminal (800), d'une puissance de transmission d'un signal de liaison montante comprend :

lors de l'envoi du signal de liaison montante sur la première porteuse de liaison montante, le calcul, par le dispositif terminal (800), de la puissance de transmission du signal de liaison montante sur la base du premier facteur de rampe de puissance ; ou

lors de l'envoi du signal de liaison montante sur la seconde porteuse de liaison montante, le calcul, par le dispositif terminal (800), de la puissance de transmission du signal de liaison montante sur la base du second facteur de rampe de puissance.

2.  Dispositif terminal (800) comprenant :

une unité de réception (801) configurée pour recevoir un message envoyé par un dispositif de réseau (900), dans lequel le message transporte un premier paramètre de perte relatif à une première porteuse de liaison montante et un second paramètre de perte relatif à une seconde porteuse de liaison montante ;

une unité de traitement (803) configurée pour calculer une puissance de transmission d'un signal de liaison montante, dans lequel le signal de liaison montante est envoyé sur la première porteuse de liaison montante, et la puissance de transmission du signal de liaison montante est calculé sur la base du premier paramètre de perte relatif à la première porteuse de liaison montante ; ou le signal de liaison montante est envoyé sur la seconde porteuse de liaison montante, et la puissance de transmission du signal de liaison montante est calculé sur la base du second paramètre de perte relatif à la seconde porteuse de liaison montante ;

une unité d'envoi (802) configurée pour envoyer une information de puissance maximale au dispositif de réseau (900) ;

dans lequel le premier paramètre de perte est un premier facteur de rampe de puissance, le second paramètre de perte est un second facteur de rampe de puissance, et des valeurs du premier facteur de rampe de puissance et du second facteur de rampe de puissance sont différentes ; et

dans lequel en calculant la puissance de transmission du signal de liaison montante, l'unité de traitement est configurée spécifiquement pour :

quand le signal de liaison montante est envoyé sur la première porteuse de liaison montante, calculer la puissance de transmission du signal de liaison montante sur la base du premier facteur de rampe de puissance ; ou

quand le signal de liaison montante est envoyé sur la seconde porteuse de liaison montante, calculer la puissance de transmission du signal de liaison montante sur la base du second facteur de rampe de puissance.

LTE base station

NR base station

1.75G          1.85G

1.75G                    3.4G          3.5G

Share an uplink
carrier with an LTE
base station when an
uplink carrier of the
LTE base station is
lightly loaded

LTE terminal

NR terminal

FIG. 1

First uplink carrier
(for example, 3.4G)
First downlink carrier
(for example, 3.5G)

Second uplink carrier
(for example, 1.75G)
Second downlink carrier
(for example, 1.85G)

Core network
CN

External network
External Network

RAN

First base
station

Second base
station

Second uplink carrier
(for example, 1.75 GHz)

First downlink carrier
(for example, 3.5
GHz)

UE

FIG. 2

Network Device             Terminal device

S31

The network device
determines a message

S32. The network device sends the
message to the terminal device

S33

The terminal device receives
the message sent by the
network device

S34

The terminal device
determines transmit power of
an uplink signal

FIG. 3

Terminal device                                                                 Base station

S41. First random access message

S42. Second random access message

S43. Third random access message

S44. Fourth random access message

FIG. 4

Terminal device                                                    Network device

S51. The terminal device sends at least one of
power headroom information and maximum
power information to the network device

S52

The network device receives the
at least one of the power
headroom information and the
maximum power information

S53

The network device calculates an
uplink path loss of the terminal
device based on the power
headroom information and the
maximum power information

S54. The network device sends the
uplink path loss to the terminal device

S55

The terminal device receives
the uplink path loss sent by
the network device

S56

The terminal device
calculates transmit power of
an uplink signal based on the
received uplink path loss

FIG. 5

Wireless device 10

Processor 110

Receiver 140

Memory 120

Transmitter 150

130

FIG. 6a

Antenna

101

Control circuit

10

Memory

Processor

102

Input/Output apparatus

FIG. 6b

Wireless device 20

Processor 210

Receiver 240

230

Memory 220

Transmitter 250

FIG. 7a

FIG. 7b

Terminal device 800

Receiving unit 801

Sending unit 802

Processing unit 803

FIG. 8

Network device 900

Receiving unit 901

Sending unit 902

Processing unit 903

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3506708 A1

- WO 2018200117 A1

**Non-patent literature cited in the description**

- **HUAWEI.** *Consideration NR UL operation for LTE-NR-coexistence*